# EUROPEAN PATENT APPLICATION

(11) **EP 2 039 245 A2**
(43) Date of publication of application: **25.03.2009**
(21) Application number: 08162428.0
(22) Date of filing: 14.08.2008
(51) Int. Cl.: A01K 63/04

(54) **Time strip actuator and assembly**

(30) Priority: 15.08.2007 US 893392
(71) Applicant: Tetra Holding (US), Inc., Blacksburg Virginia 24060 (US)
(72) Inventor: Agresta, Mark G., Blacksburg, VA 24060 (US)
(74) Representative: Zimmermann & Partner

(57) **Abstract**

A time strip actuator and assembly used to provide a visual reminder of when aquarium service is needed. The time strip actuator including an actuator cover arranged to automatically actuate a time strip to begin a timing cycle when the cover closes.

## Description

### Field of the Invention

The present disclosure relates generally to devices for use in the aquatics industry, and various methods associated with such devices. More particularly, this disclosure relates to methods and devices associated with aquarium filters.

### Background of the Invention

To maintain an ecological balance within an aquarium, it is necessary to clean the aquarium water. Cleaning is often accomplished by pumping water from the aquarium to a filter housing. In the filter housing, the water is filtered through a filter element and then returned to the aquarium. Through normal filtering operations, various particulates become trapped in the filter element, requiring the aquarium owner to regularly service (e.g., maintenance and/or replace) the filter element. Typically, the filter element requires service about every four weeks.

There are various reminders that either inherently occur, or that can be set up, to remind the aquarium owner to service the filter element. For example, one reminder is the observation of water overflowing a filter element, indicating to the owner that the filter element is clogged. Another reminder is a measure stick that can be attached to the aquarium. The measure stick can include a calendar to note the last or upcoming service date, or have floats that indicate high water levels caused by a clogged filter element.

In general, improvements to accommodate ease-of-use and convenience for the aquarium owner have been sought with respect to such methods and devices for providing reminders of and/or determining when filter element service is needed.

### Summary_of the Invention

The present disclosure relates to a time strip actuator that actuates a time strip using mechanical force. A variety of examples of desirable product features or methods are set forth in part in the description that follows, and in part will be apparent from the description, or may be learned by practicing various aspects of the disclosure. The aspects of the disclosure may relate to individual features as well as combinations of features. It is to be understood that both the foregoing general description and the following detailed description are explanatory only, and are not restrictive of the claimed invention.

### Brief Description of the Drawings

FIG. 1 is front perspective view of one embodiment of a time strip actuator, in accordance with the principles disclosed;
FIG. 2 is a side perspective view of the time strip actuator of FIG. 1;
FIG. 3 is a side elevation view of the time strip actuator of FIG. 2;
FIG. 4 is a front perspective view of the time strip actuator of FIG. 1, illustrated in a closed position;
FIG. 5 is a cross-sectional side elevation view of the time strip actuator of FIG. 4, taken along line 5-5;
FIG. 6 is a front perspective view of another embodiment of a time strip actuator, provided on a cover of a filter assembly, in accordance with the principles disclosed;
FIG. 7 is a top view of the cover and time strip actuator of the filter assembly of FIG. 6, shown in isolation;
FIG. 8 is a front perspective view of the cover and time strip actuator of FIG. 7;
FIG. 9 is a rear perspective view of the cover and time strip actuator of FIG. 8;
FIG. 10 is a side elevation view of the cover and time strip actuator of FIG. 7; and
FIG. 11 is a bottom perspective view of the cover and time strip actuator of FIG. 10.

### Detailed Description

Reference will now be made in detail to exemplary aspects of the present disclosure that are illustrated in the accompanying drawings. Wherever possible, the same reference numbers will be used throughout the drawings to refer to the same or like parts.

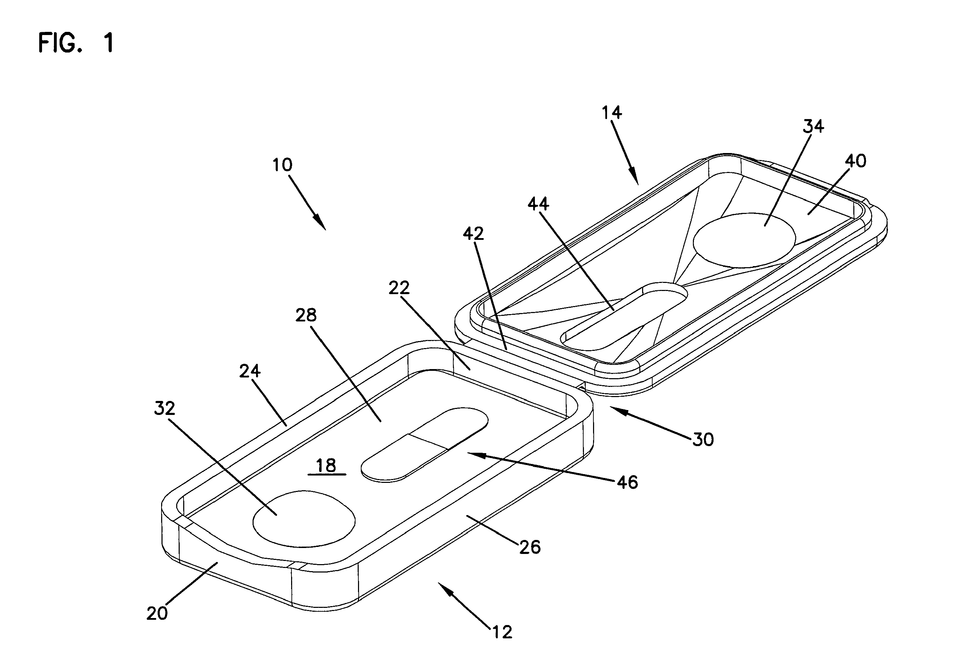

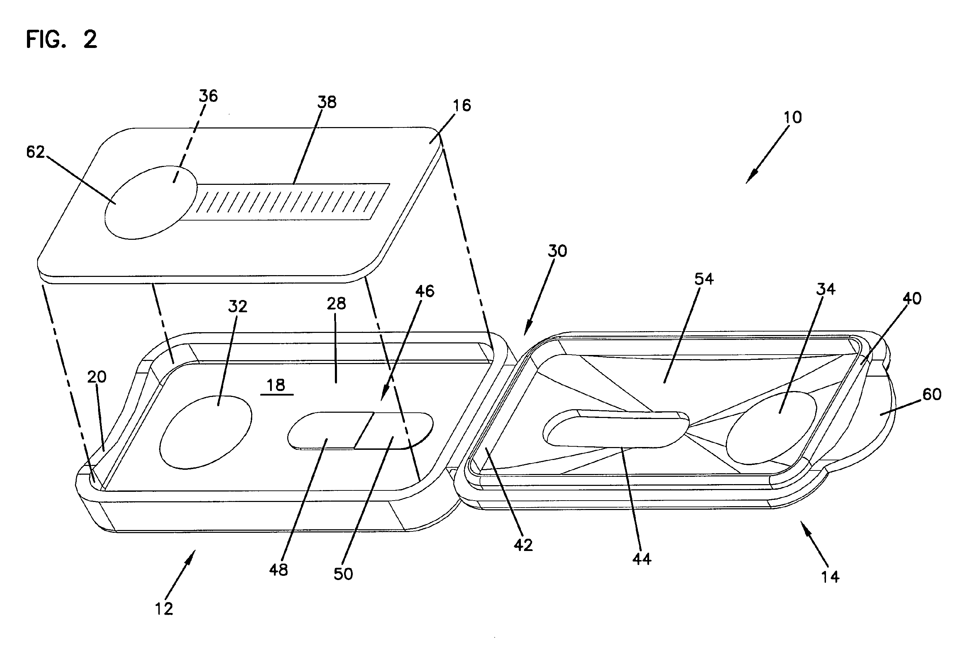

FIGS. 1-5 illustrate one embodiment of a time strip actuator 10 in accordance with the principles disclosed. The time strip actuator 10 generally includes a main body portion or holder 12 and a cover 14. A time strip 16 (FIG. 2) is positionable within the holder 12. The assembly of the time strip 16 and the time strip actuator 10 provides an aquarium owner with a convenient and easy-to-use device that indicates to the user when aquarium service is needed. For example, the assembly indicates to the user the period of time that has elapsed since the filter element was last maintained or replaced.

Referring now to FIGS. 1 and 2, the holder 12 of the time strip actuator 10 has a first end wall 20, a second end wall 22, side walls 24, 26, and a bottom wall 28. The end walls, side walls, and bottom wall define an interior or compartment 18 sized to receive the time strip 16. In the illustrated embodiment, the holder 12 has a generally rectangular construction that corresponds to the shaped construction of the time strip 16 (FIG. 2). Other holder shapes and configurations can be used, as dictated by fit and/or aesthetics.

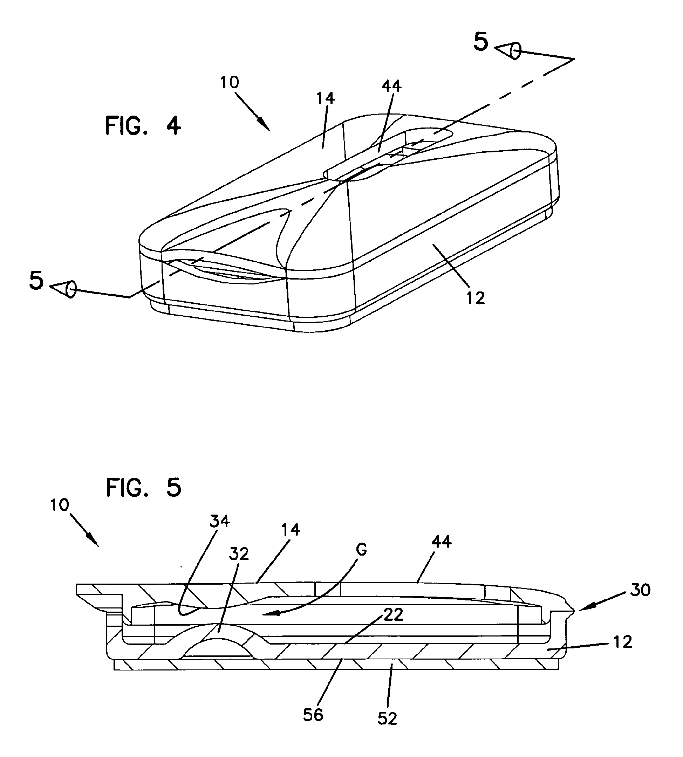

The cover 14 of the time strip actuator 10 is attached to the holder 12 at a hinged connection 30. The hinged connection 30 permits the user to selectively position the cover 14 in an open position to access the compartment 18 of the holder 12, and a closed position (FIG. 4), which secures and encloses the time strip 16 within the compartment 18. The cover includes a hinged end 42 and a free end 40. A lip or tab 60 (FIG. 2) is provided at the free end 40 to aid in opening and closing the cover 14 relative to the holder 12. In an alternative embodiment, the cover can be a separate component from that of the holder.

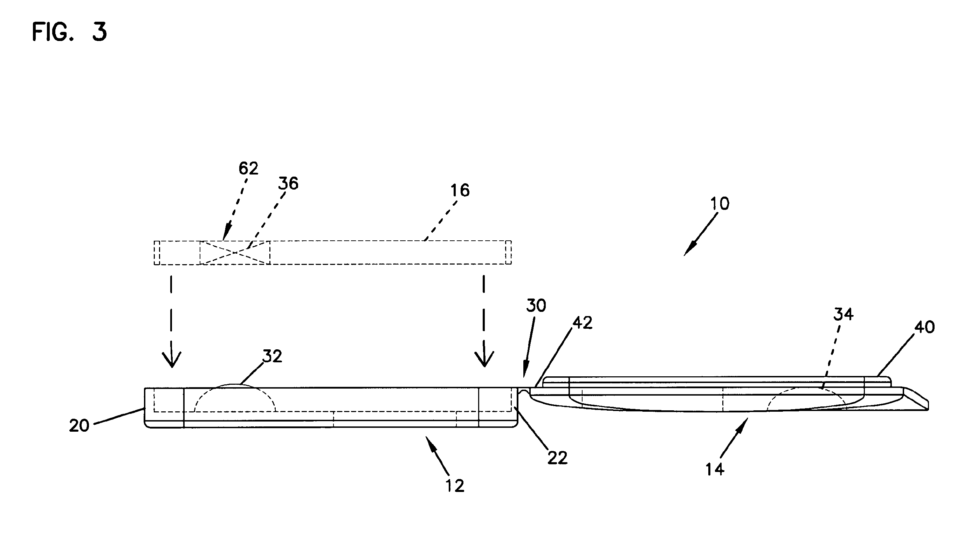

Referring now to FIGS. 2 and 3, the time strip actuator 10 includes at least one projection (e.g., a raised pad or bump) arranged to correspond with the construction of the time strip. As will be described in greater detail hereinafter, in use, the at least one projection is provided in relation to one of the holder 12 and the cover 14 to activate the time strip and begin the timing cycle for aquarium service. The activation of the time strip 16 occurs when the user closes the cover 14 of the actuator 10 relative to the holder 12.

In the illustrated embodiment, the actuator 10 includes first and second projections 32, 34. The first projection 32 is located adjacent to the first end wall 20 of the holder and the second projection 34 is located adjacent to the free end 40 of the cover 14. While activation of the time strip occurs by mechanical forces generated between both projections 32, 34, it will be understood that the actuator 10 can be provided with only one projection arranged and constructed to activate a time strip, in accordance with the principles disclosed. The first and second projections 32, 34 are further illustrated as hemispherical projections, but can be configured as or provided with other alternative shapes that cause activation of the time strip.

Referring still to FIGS. 2 and 3, the first projection 32 of the actuator 10 is located within the compartment 18 of the holder 12. The second projection 34 is carried by or provided on the cover 14. In the illustrated embodiment, the holder projection 32 is integrally formed on the bottom wall 28 of the holder 12; and the cover projection 34 is integrally formed on an interior surface 54 of the cover 14. When the cover 14 is closed, as illustrated in FIGS. 4 and 5, the projections 32, 34 project toward one another. In particular, the projections 32, 34 are aligned with one another such that a narrowed gap G is formed therebetween.

Referring back to FIGS. 2 and 3, in use, the time strip 16 is placed within the compartment 18 of the holder 12. In one embodiment, an adhesive strip 46 can be provided to secure the time strip 16 to the bottom wall 28 of the holder 12. The adhesive strip 46 illustrated includes a tab 48 that is pulled to remove a masking layer 50 and expose the adhesive material of the adhesive strip 46.

The time strip 16 generally includes a time-indicating material 36 that cooperates with time indicia 38 to inform a user of the time elapsed since activation of the time strip 16. The time-indicating material 36 is contained with a pocket 62 (e.g., a pouch, bubble, or capsule). In one embodiment, the time-indicating material 36 is ink that migrates along the time strip when released from the pocket 62--the progression of time since activation (i.e., the rupturing of the pocket) being shown by the ink's migration along the time indicia 38.

The presently disclosed actuator 10 mechanically actuates the time strip 16 using mechanical force generated in the process of closing the cover 14. In particular, when the user closes the cover 14, the projections 32, 34 pinch or squeeze the pocket 62 of the time strip 16 to rupture the pocket 62 and release the time-indicating material 36. This eliminates the need for the user to remember to activate, or even know how to activate (i.e. manually rupture the pocket), the time strip. Instead, simply by closing the cover 14, the user automatically ruptures the pocket 62 containing the time-indicating material, and begins the timing cycle for aquarium service.

Referring to FIG. 2, the cover 14 further includes a viewing window 44. The viewing window 44 is formed in the cover 14 at a location corresponding to the location of the time indicia 38 provided on the time strip 16. The viewing window 44 not only provides a user convenient visual access to the time strip 16, but also aids in verifying that the time strip is properly oriented within the compartment 18 so that time strip activation occurs.

In particular, to activate the time strip 16, the strip is oriented such that the pocket 62 is positioned adjacent to or on the projection 32 of the holder 12. After the cover 14 is closed, the time indicia 38 of a properly oriented time strip are visible through the window 44. If the time strip 16 is not properly oriented within the compartment 18, the time indicia 38 will not be visible to the user, thereby signaling to the user that the time strip must be re-oriented. The window 44 aids in verifying proper orientation so that time strip activation occurs. Additionally, after actuation, the window 44 permits a user to view the elapsed time noted by the time indicia 38 without having to open the cover 14.

Referring back to FIG. 3, the actuator 10 can further include an adhesive layer 52 to secure the assembly at a location convenient for the user. The adhesive layer 52 is provided on an exterior surface 56 of the bottom wall 28 of the holder 12. With the adhesive layer 52, a user can attach the time strip actuator 10 to an aquarium filter, aquarium wall, or other component or structure. The adhesive layer 52 permits the user to select a convenient location where the time strip actuator 10 is easily visible and accessible taking into consideration the user's particular aquarium set up.

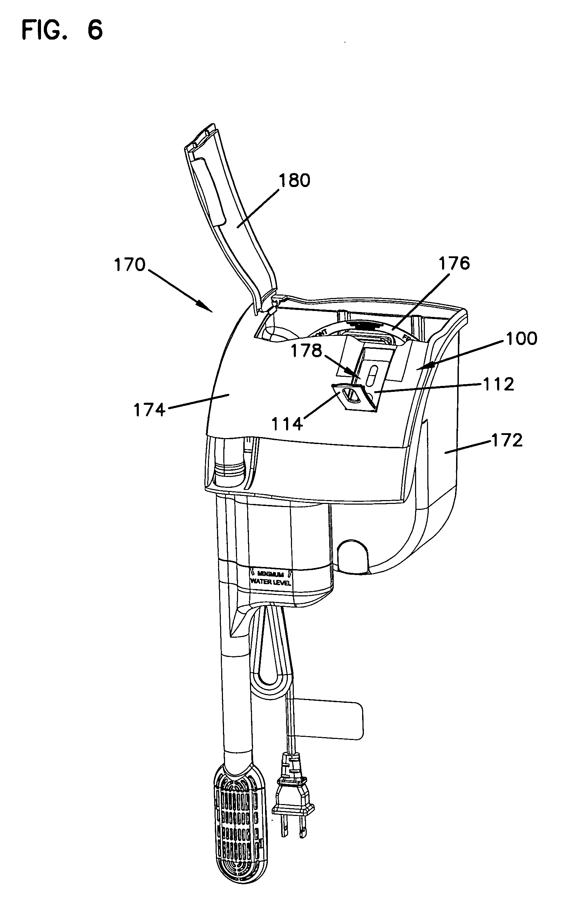

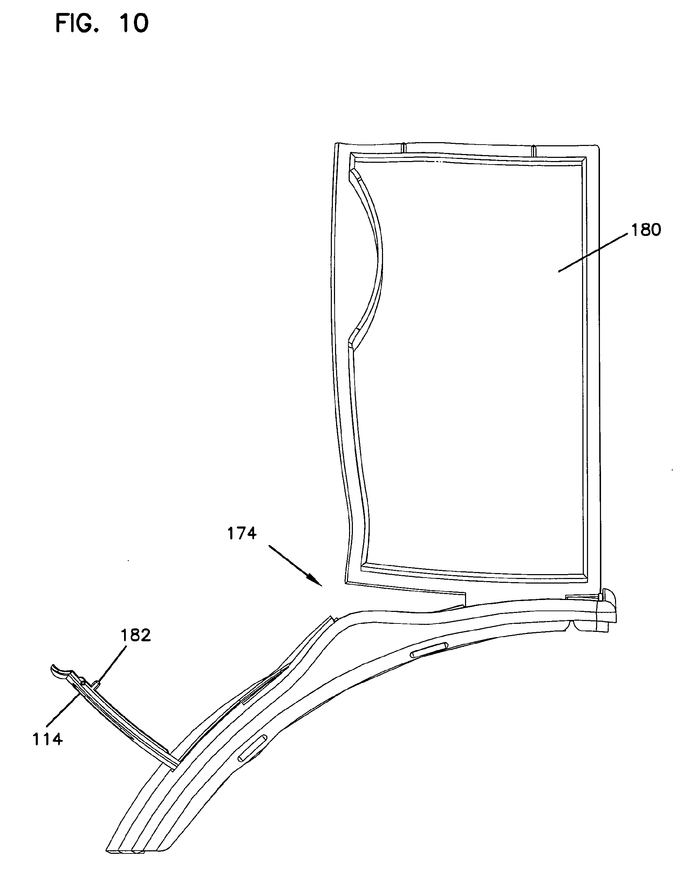

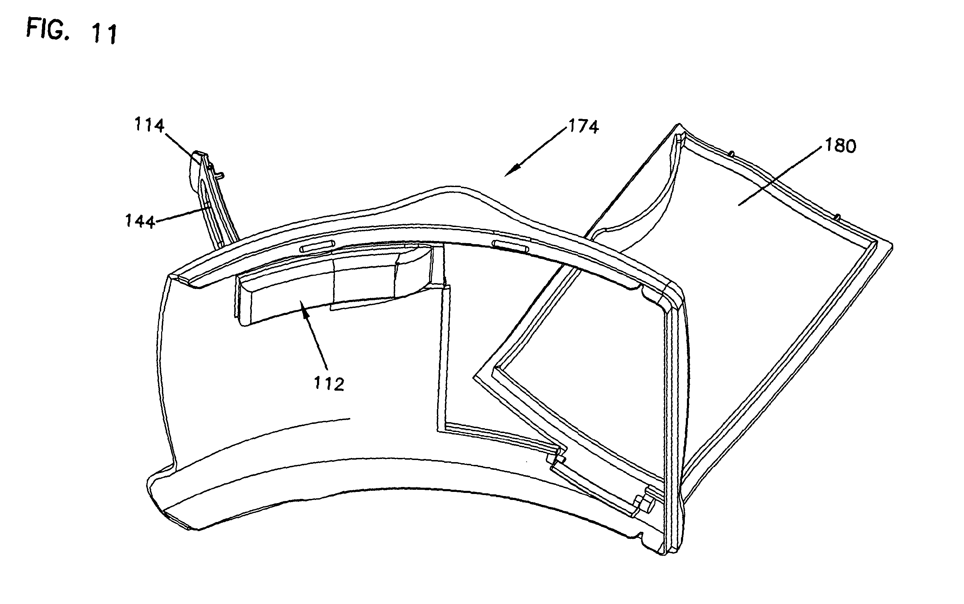

FIGS. 6-11 illustrate a second embodiment of a time strip actuator 100 in accordance with the principles disclosed. Similar to the previous embodiment, the time strip actuator 100 generally includes a main body portion or holder 112 and a cover 114. A time strip 16 (FIG. 2) is positionable within the holder 112. In this second embodiment, the time strip actuator 100 is formed as an integral component of an aquarium filter assembly 170.

Referring to FIG. 1, the aquarium filter assembly 170 having the time strip actuator 100 generally includes a filter housing 172, a filter cover 174 that encloses the filter housing, and a filter element 176 (partially shown). The filter element 176 is positionable within the filter housing 172 through an access door 180. The time strip actuator 100 of the present disclosure is formed as an integral component of the filter cover 174 of the aquarium filter assembly 170.

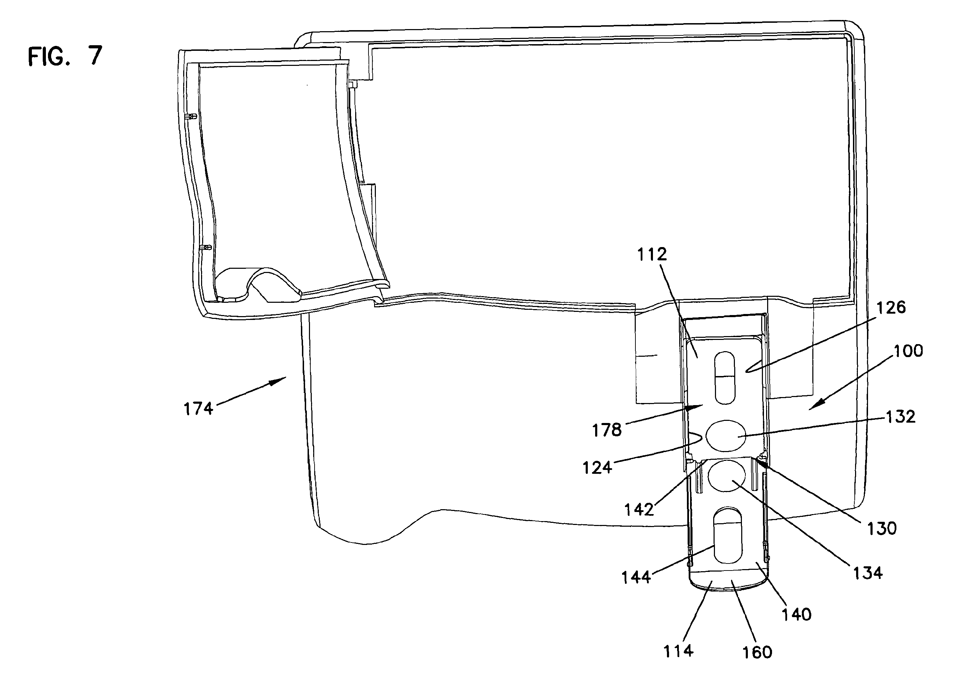

In particular, and referring now to FIGS. 7-9, the holder 112 of the actuator 100 is formed as a recess 178 in the filter cover 174. The recess 178 has a first end wall 120, a second end wall 122, side walls 124, 126, and a bottom wall 128. The recess 178 is sized to receive the time strip 16 (FIG. 2). In the illustrated embodiment, the recess 178 has a generally rectangular construction that corresponds to the shaped construction of the time strip 16 (FIG. 2). Other holder shapes and configurations can be used, as dictated by fit and/or aesthetics.

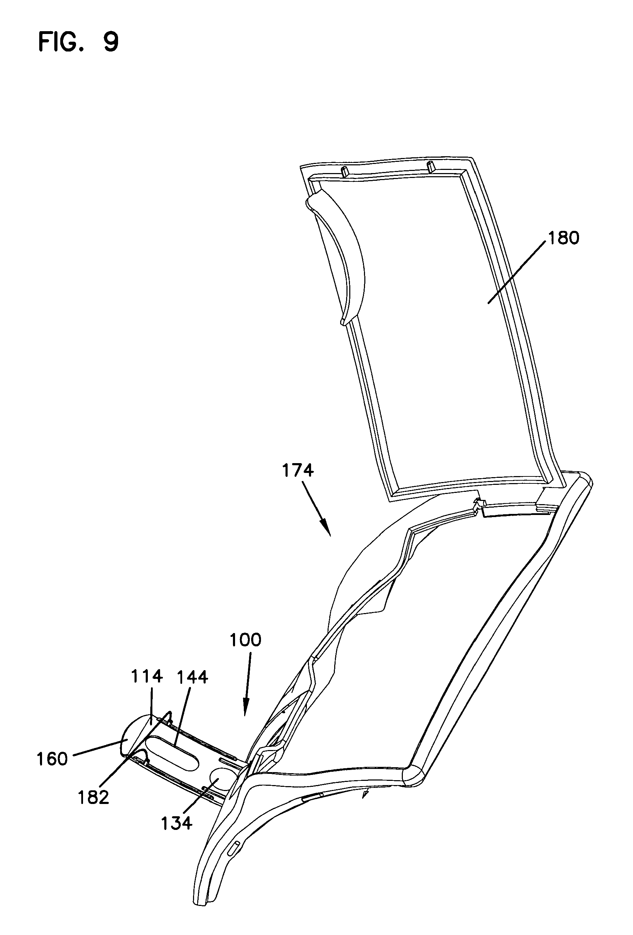

The cover 114 of the time strip actuator 100 is attached to the filter cover 174 in relation to the recess 178 at a hinged connection 130. The hinged connection 130 permits the user to selectively position the actuator cover 114 in an open position to access the recess 178, and a closed position to secure and enclose the time strip 16 within the recess 178. The cover 114 includes a hinged end 142 and a free end 140. A lip or tab 160 (FIG. 7) is provided at the free end 140 to aid in opening and closing the cover 114 relative to the filter cover 174. In an alternative embodiment, the cover can be a separable component from that of the filter cover. As shown in FIG. 9, the cover 114 can further include standoffs 182 to position the cover 114 so that the tab 160 is accessible to open and close the cover.

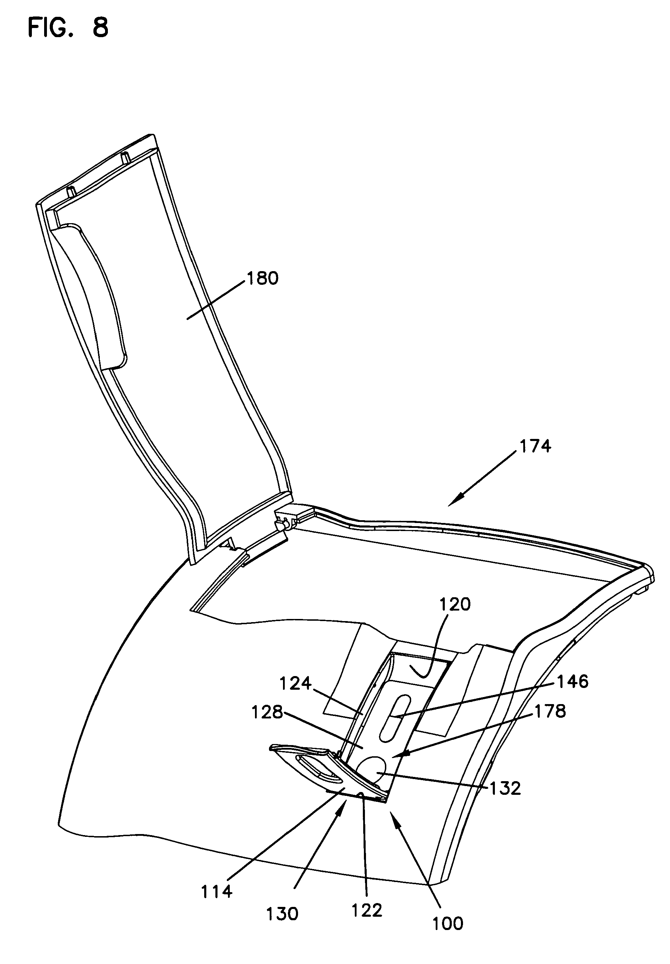

Referring now to FIGS. 8 and 9, the time strip actuator 100 includes at least one projection (e.g., a raised pad or bump) arranged to correspond with the construction of the time strip. Activation of the time strip 16 occurs when the user closes the cover 114 of the actuator 100 relative to the filter cover 174.

In the illustrated embodiment, the actuator 100 includes first and second projections 132, 134. The first projection 132 is located within the recess 178 adjacent to the second end wall 122 of the recess 178, and the second projection 134 is carried by the cover 114 adjacent to the hinged end 142 of the cover 114. In the illustrated embodiment, the recess projection 132 is integrally formed on the bottom wall 128 of the recess 178; and the cover projection 134 is integrally formed on an interior surface 154 of the cover 114. While activation of the time strip occurs by mechanical forces generated between both projections 132, 134, it will be understood that the actuator 10 can be provided with only one projection arranged and constructed to activate a time strip, in accordance with the principles disclosed.

In use, the time strip 16 is placed within the recess 178 of the filter cover 174. In one embodiment, an adhesive strip 146 can be provided to secure the time strip 16 to the bottom wall 128 of the recess 178. As previously described, the time-indicating material of the time strip cooperates with the time indicia 38 to inform a user of the time elapsed since activation of the time strip 16.

The presently disclosed actuator 100 of this second embodiment mechanically actuates the time strip 16 using mechanical force generated in the process of closing the cover 114. In particular, when the user closes the actuator cover 114, the projections 132, 134 pinch or squeeze the pocket 62 (FIG. 2) of the time strip 16 to rupture the pocket 62 and release the time-indicating material 36. This eliminates the need for the user to remember to activate, or even know how to activate (i.e. manually rupture the pocket), the time strip. Instead, simply by closing the cover 114, the user automatically ruptures the pocket 62 containing the time-indicating material, and begins the timing cycle for aquarium service.

Also similar to the previous embodiment, the cover 114 includes a viewing window 144. The viewing window 144 is formed in the cover 114 at a location corresponding to the location of the time indicia 38 provided on the time strip 16. The viewing window 144 not only provides a user convenient visual access to the time strip 16, but also aids in verifying that the time strip is properly oriented within the recess 178, as previously described.

In general, the time strip actuator embodiments disclosed are designed for use with an aquarium filter assembly to aid in reminding a user of when filter element service is needed. The time strip actuator can be a separate component of the aquarium filter assembly, as illustrated in FIGS. 1-5, or can be an integral component of the assembly, as illustrated in FIGS. 6-11. In accordance with the principles disclosed, the time strip actuator can also be used in other applications where a reminder or indication of an elapsed period of time is of benefit.

The above specification provides a complete description of the present invention. Since many embodiments of the invention can be made without departing from the spirit and scope of the invention, certain aspects of the invention reside in the claims hereinafter appended.

## Claims

1. A time strip actuator, comprising:
a) a main body defining a compartment, the compartment being sized to receive a time strip;
b) a cover attached to the main body at a hinged connection, the cover being positionable in a closed position and an open position; and
c) a first projection located within the compartment, and a second projection carried by the cover, the first and second projections projecting toward one another, in alignment, when the cover is in the closed position.

2. The time strip actuator of claim 1, wherein the cover defines a viewing window.

3. The time strip actuator of claim 1, wherein the cover has a first hinged end and a second free end, the second projection carried by the cover being located adjacent to the second free end of the cover.

4. The time strip actuator of claim 1, wherein the cover has a first hinged end and a second free end, the second projection carried by the cover being located adjacent to the first hinged end of the cover.

5. The time strip actuator of claim 1, wherein the main body is formed as an integral recess in a filter assembly component.

6. The time strip actuator of claim 5, wherein the main body is formed as an integral recess in a cover of an aquarium filter assembly.

7. The time strip actuator of claim 1, wherein the first and second projections are hemispherical in shape.

8. A time strip and actuator assembly, comprising:
a) a time strip actuator, including:
i) a holder defining a compartment;
ii) a cover positionable in open and closed positions relative to the holder; and
iii) a first projection located within the compartment and a second projection located on an interior side of the cover; and,
b) a time strip located within the compartment of the holder, the time strip including time-indicating material, the time-indicating material being contained within a pocket provided on the time strip;
c) wherein the first and second projections activate the time strip by rupturing the pocket of the time strip when the cover of the actuator moves from the open position to the closed position.

9. The assembly of claim 8, wherein the time strip includes indicia that inform a user of the time elapsed since activation of the time strip.

10. The assembly of claim 9, wherein the cover defines a window, the indicia being visible through the window of the cover when the cover is in the closed position.

11. The assembly of claim 8, wherein the first projection and the second projection project toward one another when the cover is in the closed position.

12. The assembly of claim 11, wherein the first and second projections are aligned with one another when the cover is in the closed position.

13. The assembly of claim 12, wherein the first and second projections pinch the pocket of the time strip therebetween to actuate the time strip as the cover moves toward the closed position.

14. The assembly of claim 8, wherein the cover is attached to the holder at a hinged connection.

15. The assembly of claim 14, wherein the cover has a first hinged end and a second free end, the second projection of the cover being located adjacent to the second free end of the cover.

16. The assembly of claim 14, wherein the cover has a first hinged end and a second free end, the second projection of the cover being located adjacent to the first hinged end of the cover.

17. The assembly of claim 8, wherein the holder is formed as an integral recess in a filter assembly component.

18. The assembly of claim 17, wherein the holder is formed as an integral recess in a cover of an aquarium filter assembly.

19. An aquarium filter arrangement, comprising:
a) a filter housing;
b) a filter cover that encloses the filter housing, the filter cover defining a recess;
c) a time strip positioned within the recess of the filter cover, the time strip including time-indicating material, the time-indicating material being contained within a pocket provided on the time strip;
d) an actuator cover positionable in open and closed positions relative to the filter cover, the actuator cover providing access to the recess in the open position and enclosing the recess in the closed position; and
e) a projection provided in relation to one of the recess and the actuator cover;
f) wherein the projection activates the time strip by rupturing the pocket of the time strip when the actuator cover moves from the open position to the closed position.

20. The arrangement of 19, wherein the projection is located within the recess of the filter cover.

21. The arrangement of claim 19, wherein the projection is located on an interior side of the actuator cover.

22. The arrangement of claim 21, further including a projection located within the recess, the recess projection and the actuator cover projection projecting toward one another when the actuator cover is in the closed position.

23. The arrangement of claim 22, wherein the projection in the recess and the projection of the actuator cover are aligned with one another when the actuator cover is in the closed position.

24. The arrangement of claim 19, wherein the actuator cover defines a viewing window, the time strip being visible through the viewing window when the actuator cover is in the closed position.

25. The arrangement of claim 19, wherein the actuator cover is attached to the filter cover at a hinged connection.

26. The arrangement of claim 25, wherein the actuator cover has a first hinged end and a second free end, the projection being located adjacent to the first hinged end of the cover.
